**Europäisches Patentamt**

**European Patent Office**

**Office européen des brevets**

(19)

(11) Veröffentlichungsnummer : **0 342 429 B1**

(12)

# EUROPÄISCHE PATENTSCHRIFT

(45) Veröffentlichungstag der Patentschrift :
**22.07.92 Patentblatt 92/30**

(21) Anmeldenummer : **89107899.0**

(22) Anmeldetag : **02.05.89**

(51) Int. Cl.⁵ : **B60R 13/04**

(54) **Leiste, insbesondere Seitenwandleiste für Fahrzeuge.**

(30) Priorität : **10.05.88 DE 3815928**

(43) Veröffentlichungstag der Anmeldung :
**23.11.89 Patentblatt 89/47**

(45) Bekanntmachung des Hinweises auf die
Patenterteilung :
**22.07.92 Patentblatt 92/30**

(84) Benannte Vertragsstaaten :
**BE DE ES FR GB IT SE**

(56) Entgegenhaltungen :
**DE-A- 2 530 513**

(56) Entgegenhaltungen :
**DE-A- 2 756 537**
**DE-A- 2 821 095**
**DE-A- 3 544 217**
**DE-U- 8 706 438**

(73) Patentinhaber : **Gebr. Happich GmbH**
**Postfach 10 02 49 Clausenbrücke 1**
**W-5600 Wuppertal 1 (DE)**

(72) Erfinder : **Marcus, Armin**
**Zedernweg 1**
**W-5600 Wuppertal 1 (DE)**
Erfinder : **Heuft, Klaus**
**Beyenburgerstrasse 23**
**W-5630 Remscheid 11 (DE)**

## Beschreibung

Die Erfindung bezieht sich auf eine Leiste, insbesondere Seitenwandleiste für Fahrzeuge, gemäß dem Oberbegriff des Anspruchs 1.

Bei einer durch offenkundige Benutzung bekanntgewordenen Leiste der gattungsgemäßen Art (siehe z.B. DE-A-2 821 095), wurde dieselbe mit Hinterschnittausbildungen versehen und mittels eines Stopfen und Tüllen umfassenden Befestigungssystems, in Längslöchern positioniert, montiert. Als nachteilig bei diesen Leisten sind insbesondere die für die Hinterschnittausbildungen im Werkzeug erforderlichen Schieber hervorzuheben.

Der vorliegenden Erfindung liegt demgemäß die Aufgabe zugrunde, eine Leiste der eingangs genannten Art so zu gestalten und auszurüsten, daß sie gegenüber dem Stand der Technik wesentlich einfacher und kostengünstiger herstellbar und montierbar ist.

Zur Lösung dieser Aufgabe ist erfindungsgemäß vorgesehen, daß jedes Haltestegpaar jeweils mit einem, die Haltestege formschlüssig aufnehmenden Adapterelement verbunden ist, und daß jedes Adapterelement an seiner unteren, den Haltestegen abgewandten Seite mit Klipsarmen zum Aufklipsen auf die an der Fahrzeugkarosserie in üblicherweise festzulegenden Klipse ausgebildet ist.

Durch diese erfindungsgemäßen Maßnahmen werden wesentliche Vorteile in verschiedener Hinsicht erreicht. Dabei ist zunächst zu erwähnen, daß die Leiste, mit Ausnahme der Materialverdickungen an den Haltestegen, die sich allerdings problemlos zwangsentformen lassen, keine Hinterschnitte aufweist und kostengünstig herzustellen ist. Weiterhin kann nunmehr die Leiste, die z.B. aus, ggf. mit Füllstoffen, insbesondere Glasfasern angereicherten Polyurethan besteht und im Reaktionsspritzguß erstellt ist, aufgrund des erfindungsgemäß vorgesehenen Adapterelements, auf herkömmliche Spreiznietklipse aufgeklipst werden, was beachtlich ist, wenn man bedenkt, daß das für die Herstellung der Leiste verwendete Material kein klipsfähiger Werkstoff ist.

In Weiterbildung der Erfindung können an der Leistenrückseite zwei längsdurchlaufende, die Haltestege tragende Stegstümpfe angeformt sein. Die Stegstümpfe dienen der Leistenstabilisierung und insbesondere einem Toleranzausgleich auf den weiter unten noch eingegangen wird.

Jeder Haltesteg kann am freien Endbereich einen dem jeweils gegenüberliegenden Haltesteg zugewandten Wulst als Materialverdickung aufweisen. Weiterhin kann vorgesehen sein, daß die Haltestege jedes Haltestegpaares jeweils symmetrisch, links und rechts neben der Leistenlängsmittelachse verlaufend, an der Leistenrückseite angeformt sind. Auch können die Haltestege über ihre gesamte axiale Erstreckung ein gleichbleibendes Querschnittsprofil aufweisen.

Gemäß einer bevorzugten Ausgestaltung der Erfindung weist jedes Adapterelement einen H-förmigen Querschnitt auf, wobei die oberhalb des Steges befindlichen Schenkel desselben doppelwandig ausgebildet sind und jeweils eine, eine Hinterschneidung aufweisende Aufnahmekammer für die Haltestege eines Haltestegpaares bilden und wobei die unterhalb des Steges befindlichen Schenkel als mit Klipsnasen versehene Klipsarme ausgebildet sind.

Das derart ausgebildete Adapterelement kann relativ einfach und kostengünstig , insbesondere als Kunststoff-Spritzgußteil gefertigt werden, wobei natürlich ein klipsfähiger Werkstoff einzusetzen ist. Das Adapterelement ist einfach zu montieren, und zwar an der Leiste durch bloßes Aufschieben auf ein Haltestegpaar und an der Karosserie durch bloßes Aufklipsen auf einen hier anzuordnenden Halteklips. Das Adapterelement ist an der Leiste gegen eine quer zur Leistenlängsachse angreifende Abzugskraft formschlüssig gesichert, weil die Wülste der Haltestege in die entsprechenden Hinterschnitte des Adapterelements eingreifen. Eine Sicherung der Adapterelemente in Leistenlängsrichtung läßt sich insbesondere durch Kraftschluß und/oder Klemmen erzielen, wozu vorgesehen sein kann, daß die für die Haltestege vorgesehenen Aufnahmekammern der Adapterelemente sich jeweils entgegen der Aufschieberichtung keilförmig verjüngen.

Eine weitere vorteilhafte Maßnahme der Erfindung besteht darin, daß die oberhalb des Steges liegenden doppelwandigen Schenkel des Adapterelements jeweils zumindest einseitig eine solche Höhe aufweisen, daß sie sich an jeweils einem der die Haltestege tragenden Stegstümpfe abzustützen vermögen. Hierdurch wird ein Toleranzausgleich bzw. eine Zwangszentrierung zwischen Haltestegen und Adapterelement sichergestellt.

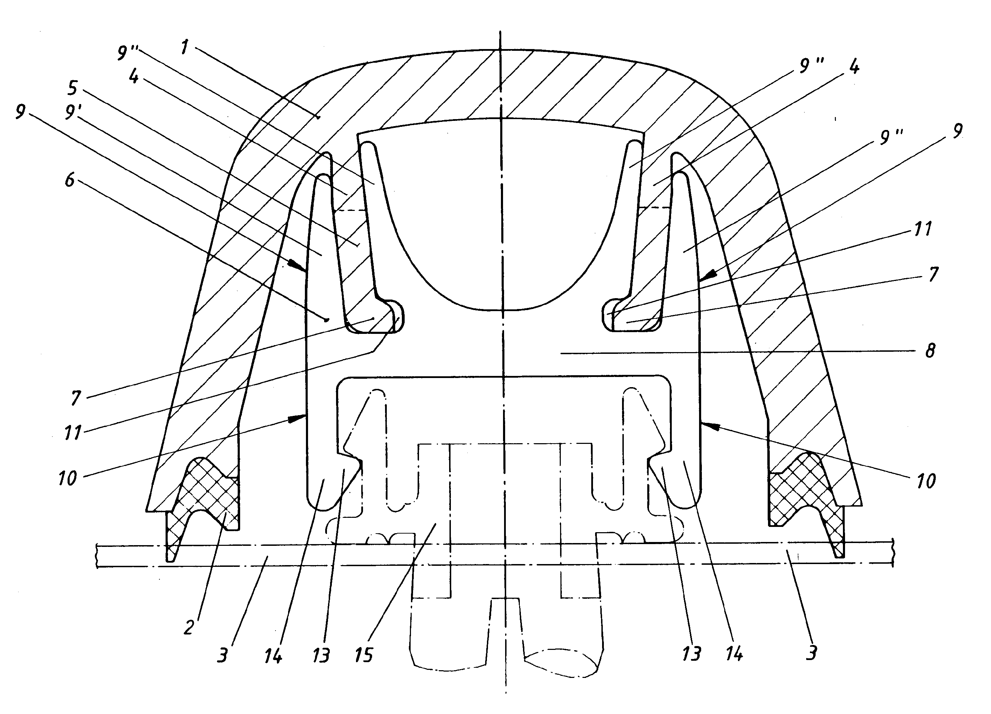

Ein Ausführungsbeispiel der Erfindung wird nachfolgend anhand der Zeichnung näher erläutert.

Die einzige Figur zeigt einen Querschnitt durch eine Leiste in Höhe einer Befestigungsposition.

Die Leiste weist einen im Querschnitt C-förmig ausgebildeten Grundkörper 1 auf, an dessen freier umlaufender Randkante eine lippenförmiger Körper 2 aus weicherem Werkstoff umlaufend angeordnet sein kann, der sich gegen eine Fahrzeugkarosserie 3, die strichpunktiert angedeutet ist, abstützt. Die hohl ausgebildete Leistenrückseite weist rechts und links neben der Leistenlängsmittelachse in Leistenlängsrichtung durchlaufend angeformte Stegstümpfe 4 auf, an die wiederum Haltestege 5 gleicher Dicke angeformt sind. Jeder Stegstumpf 4 trägt über die Leistenlänge, mehr oder weniger gleichmäßig verteilt mehrere, in Abstand voneinander angeordnete Haltestege 5, die sich jeweils über einen axialen Bereich der Leiste erstrecken. Jeweils zwei auf

2

gleicher Leistenhöhe einandergegenüberliegende Haltestege 5 bilden ein mit einem Adapterelement 6 zu verbindendes Haltestegpaar. Jeder der Haltestege 5 weist an seinem freien Stegende eine als Wulst 7 ausgebildete Material-verdickung auf, welche jeweils der Leistenlängsmittelachse zugewandt ist. Die Haltestege 5 sind relativ dünnwandig ausgebildet, so daß sich keine Probleme bei der vorgesehenen Zwangsentformung der Wülste 7 ergibt. Die Haltestege 5 werden durch das aufgeschobene Adapterelement 6 stabilisiert.

Das Adapterelement 6 weist ein H-förmiges Querschnittsprofil auf und umfaßt einen Steg 8, zwei obere Schenkel 9 und zwei untere Schenkel 10. Die oberen Schenkel 9 sind jeweils doppelwandig ausgebildet und bestehen jeweils aus einem äußeren Teilschenkel 9′ und einem inneren Teilschenkel 9″, welch letzterer im Übergangsbereich zum Steg 8 mit einer Hohlkehle 11 ausgebildet ist. Die Teilschenkel 9′ und 9″ bilden jeweils eine, der Querschnittsfläche der Haltestege 5 angepaßte Aufnahmekammer 12 für einen Haltesteg 5. Bei der Montage des Adapterelements 6 wird dieses vor das Stirnende eines Haltestegpaares gebracht und durch eine Schiebebewegung in Leistenlängsrichtung mit den dann die Aufnahmekammern 12 ausfüllenden Haltestegen 5 verbunden.

Um die Montage zu vereinfachen, können die Aufnahmekammern 12 vorderseitig trichterförmig erweitert sein. Ferner können die Aufnahmekammern 12 sich entgegen der Aufschieberichtung keilförmig verjüngen, um eine verliersichere Festlegung der Adapterelemente 6 an der Leiste zu erreichen. Auch Können die Aufnahmekammern 12 einendig mit einem Anschlag oder einer Begrenzungswand versehen sein.

Wie die Zeichnung weiterhin zeigt, sind die inneren Teilschenkel 9″ zum Zwecke eines Toleranzausgleichs und einer Zentrierung des Adapterelements 6 gegenüber den äußeren Teilschenkeln 9′ derart verlängert, daß sie sich an den Stegstümpfen 4 abzustützen vermögen.

Die unteren Schenkel 10 des Adapterelements 6 sind jeweils als mit Klipsnasen 13 versehene Klipsarme 14 ausgebildet, so daß das Adapterelement 6 auf einen üblichen, lediglich strichpunktiert angedeuteten Spreiznietklips 15 od. dgl., der seinerseits an der Karosserie 3 festgelegt ist, aufklipsbar ist. Um eine stets zuverlässige Klipsverbindung zu gewährleisten, empfiehlt es sich, für das Adapterelement 6 eine größere axiale Länge als für den Spreiznietklips üblich vorzusehen.

**Patentansprüche**

1. Leiste, insbesondere Seitenwandleiste für Fahrzeuge, bestehend aus einem Kunststoffkörper (1) mit etwa C-förmigem Querschnitt, dessen freie Längskante, ggf. unter Zwischenlage eines relativ weichen Polstermaterials (2) auf der Fahrzeugkarosserie (3), an der die Leiste mittels Klipsen (15) zu befestigen ist, zur Anlage gelangen, wobei die Leiste an ihrer der Fahrzeugkarosserie (3) zugewandten Seite mehrere, über die Länge der Leiste verteilte, einstückig angeformte und gegen die Fahrzeugkarosserie (3) ausgerichtete Haltestegpaare aufweist und wobei jeder der mit Abstand nebeneinander angeordneten und sich über einen axialen Teilbereich der Leiste erstreckenden Haltestege (5) jedes Haltestegpaares mit einer Materialverdickung (Wulst 7), vorzugsweise am freien Endbereich ausgebildet ist, dadurch gekennzeichnet, daß jedes Haltestegpaar jeweils mit einem, die Haltestege (5) formschlüssig aufnehmenden Adapterelement (6) verbunden ist, und daß jedes Adapterelement (6) an seiner unteren, den Haltestegen (5) abgewandten Seite mit Klipsarmen (14) zum Aufklipsen auf die an der Fahrzeugkarosserie (3) in üblicher Weise festzulegenden Klipse (15) ausgebildet ist.

2. Leiste nach Anspruch 1, dadurch gekennzeichnet, daß an der Leistenrückseite zwei längsdurchlaufende, die Haltestege (5) tragende Stegstümpfe (4) angeformt sind.

3. Leiste nach Anspruch 1 oder 2, dadurch gekennzeichnet, daß jeder Haltesteg (5) am freien Endbereich einen dem jeweils gegenüberliegenden zugewandten Wulst (7) als Materialverdickung aufweist.

4. Leiste nach einem oder mehreren der Ansprüche 1 bis 3, dadurch gekennzeichnet, daß die Haltestege (5) jedes Haltestegpaares jeweils symmetrisch, links und rechts neben der Leistenlängsmittelachse verlaufend, an der Leistenrückseite angeformt sind.

5. Leiste nach einem oder mehreren der Ansprüche 1 bis 4, dadurch gekennzeichnet, daß die Haltestege (5) über ihre gesamte axiale Erstreckung ein gleichbleibendes Querschnittsprofil aufweisen.

6. Leiste nach einem oder mehreren der Ansprüche 1 bis 5, dadurch gekennzeichnet, daß jedes Adapterelement (6) einen H-förmigen Querschnitt aufweist, wobei die oberhalb des Steges (8) befindlichen Schenkel (9) desselben doppelwandig ausgebildet sind und jeweils eine, eine Hinterschneidung (Hohlkehle 11) aufweisende Aufnahmekammer (12) für die Haltestege (5) eines Haltestegpaares bilden und wobei die unterhalb des Steges (8) befindlichen Schenkel (10) als mit Klipsnasen (13) versehene Klipsarme (14) ausgebildet sind.

7. Leiste nach einem oder mehreren der vorangegangenen Ansprüche, dadurch gekennzeichnet, daß die oberhalb des Steges (8) liegenden doppelwandigen Schenkel (9) des Adapterelements (6) jeweils zumindest einseitig eine solche Höhe aufweisen, daß sie sich an jeweils einem der die Haltestege (5) tragenden Stegstümpfe (4) abzustützen vermögen.

8. Leiste nach einem oder mehreren der vorangegangenen Ansprüche, dadurch gekennzeichnet, daß die für die Haltestege (5) vorgesehenen Aufnahmekammern (12) des Adapterelements (6) sich entgegen der Aufschieberichtung keilförmig verjüngen.

## Claims

1. A moulding, especially a side panel moulding for vehicles, comprising a synthetic plastics material body (1) with approximately C-shaped cross-section, the free longitudinal edges of which come to abut, possibly with interposition of a relatively soft cushion material (2), on the vehicle body (3), to which the moulding is fastenable by means of clips (15), while the moulding comprises on its side facing the vehicle body (3) several pairs of integrally formed-on retaining arms distributed over the length of the moulding and directed towards the vehicle body (3), and while each of the retaining arms (5), arranged side by side with spacing and extending over an axial partial zone of the moulding, of each retaining arm pair is formed with a material thickening (bead 7) preferably at the free end zone, characterised in that each retaining arm pair is engaged in each case with an adapter element (6) accommodating the retaining arms (5) in shape-locking manner, and in that each adapter element (6) is formed on its lower side, remote from the retaining arms (5), with clip arms (14) for clipping on to the clips (15) which are to be made fast on the vehicle body (3) in the usual way.

2. A moulding according to Claim 1, characterised in that on the moulding rear there are formed two longitudinally continuously extending stub arms (4) carrying the retaining arms (5).

3. A moulding according to Claim 1 or 2, characterised in that each retaining arm (5) comprises at the free end region a bead (7) facing the opposite one in each case, as material thickening.

4. A moulding according to any one or more of Claims 1 to 3, characterised in that the retaining arms (5) of each retaining arm pair are formed on the moulding rear side in each case symmetrically, positioned to the left and right of the longitudinal central axis of the moulding.

5. A moulding according to any one or more of Claims 1 to 4, characterised in that the retaining arms (5) possess a constant cross-sectional profile over their entire axial extent.

6. A moulding according to any one or more of Claims 1 to 5, characterised in that each adapter element (6) possesses an H-shaped cross-section, where the legs (9) thereof situated above the cross-piece (8) are of double-walled formation and each forms a reception chamber (12), comprising an undercutting (hollow groove 11), for the retaining arms (5) of a pair of retaining arms, and where the legs (10) situated beneath the cross-piece (8) are formed as clip arms (14) provided with clip noses (13).

7. A moulding according to any one or more of the preceding Claims, characterised in that the double-walled legs (9), lying above the cross-piece (8), of the adapter element (6) each have, at least on one side, such a height that they are capable of supporting themselves in each case on one of the stub arms (4) carrying the retaining arms (5).

8. A moulding according to any one or more of the preceding Claims, characterised in that the reception chambers (12), provided for the retaining arms (5), of the adapter element (6) narrow in wedge form in a direction opposite to the push-on direction.

## Revendications

1. Moulure, notamment moulure latérale pour véhicules automobiles, constituée d'un corps en matière plastique (1) de section transversale à peu près en C dont le côté longitudinal libre vient s'appliquer, éventuellement par interposition d'une matière relativement souple formant coussin (2), sur la carrosserie (3) du véhicule sur laquelle la moulure doit être fixée au moyen de clips (15), la moulure présentant sur son côté tourné vers la carrosserie de véhicule (3) plusieurs paires de nervures de retenue, réparties sur la longueur de la moulure, formées d'une seule pièce avec celle-ci et dirigées vers la carrosserie de véhicule (3) et dans laquelle chacune des nervures de retenue (5) de chaque paire de nervures, juxtaposées et espacées les unes des autres et s'étendant sur une partie axiale de la moulure, présente une surépaisseur de matière (bourrelet 7), de préférence dans la région terminale libre, caractérisée en ce que chaque paire de nervures de retenue est reliée avec un adaptateur (6), logeant par concordance de forme les nervures de retenue (5), et en ce que chaque adaptateur (6) présente sur son côté inférieur, opposé aux nervures de retenue (5), des bras de clipsage (14) pour le clipsage sur des clips (15) à fixer de manière usuelle sur la carrosserie (3) du véhicule.

2. Moulure selon la revendication 1, caractérisée en ce que sur le côté arrière de la moulure il est formé deux troncs de nervure (4) portant les nervures de retenue (5).

3. Moulure selon la revendication 1 ou 2, caractérisée en ce que chaque nervure de retenue (5) présente, dans la partie terminale libre, un bourrelet (7) tourné vers la nervure opposée, constitué par une surépaisseur des matière.

4. Moulure selon une ou plusieurs des revendications 1 à 3, caractérisée en ce que les nervures de retenue (5) de chaque paire de nervures sont formées sur le côté arrière de la moulure, symétriquement, à gauche et à droite de l'axe médian longitudinal de la moulure.

5. Moulure selon l'une ou plusieurs des revendications 1 à 4, caractérisée en ce que les nervures de retenue (5) présentent sur toute leur extension axiale, un profil de section transversale constant.

6. Moulure selon l'une ou plusieurs des revendications 1 à 5, caractérisée en ce que chaque adaptateur (6) présente une section transversale en H, les branches (9) de celui-ci, se trouvant au-dessus de la traverse (8), étant à double paroi et formant chacune un logement (12), présentant un détalonnage (gorge creuse 11) pour les nervures de retenue (5) d'une paire de nervures et les branches (10) se trouvant au-dessous de la traverse (8) étant conçues sous la forme de bras de clipsage (14) pourvus d'ergots de clipsage (13).

7. Moulure selon l'une ou plusieurs des revendications précédentes, caractérisée en ce que les branches (9), à double paroi, situées au-dessous de la traverse (8), de l'adaptateur (6), présentent sur un côté au moins une hauteur telle qu'elles peuvent prendre appui contre l'un des troncs de nervure (4) portant les nervures de retenue (5).

8. Moulure selon l'une ou plusieurs des revendications précédentes, caractérisée en ce que les logements (12), prévus pour les nervures de retenue (5), de l'adaptateur (6), se rétrécissent coniquement dans le sens contraire au sens d'insertion.